# EUROPEAN PATENT SPECIFICATION

(11) **EP 3 194 245 B1**
(45) Date of publication and mention of the grant of the patent: **20.03.2019**
(21) Application number: 15771388.4
(22) Date of filing: 15.09.2015
(51) Int. Cl.: B62B 1/20, B62B 5/00

(54) **COLLAPSIBLE CART**
ZUSAMMENKLAPPBARER WAGEN
CHARIOT PLIANT

(30) Priority: 15.09.2014 US 201462050445 P
(43) Date of publication of application: 26.07.2017
(73) Proprietor: MTD Products Inc., Valley City, OH 44280 (US)
(72) Inventor: ERTEL, Jason R., Cleveland, Ohio 44106 (US); MCKENZIE, John, Aurora, Ohio 44202 (US); YE, Danwei, Mayfield Heights, OH 44124 (US)
(74) Representative: Conti, Marco
(86) International application number: PCT/US2015/050180
(87) International publication number: WO 2016/044273

(56) References cited:
- GB-A- 2 299 307
- US-A- 2 720 413
- US-A1- 2008 284 119
- US-A1- 2012 133 112

## Description

### FIELD OF THE INVENTION

The present invention is directed to working tools, and more particularly, to carts or other wheeled transport devices used for lawn or property maintenance.

### BACKGROUND OF THE INVENTION

Traditional carts, wheel barrows, or other wheeled transport devices are useful in transporting tools, gardening materials, and lawn or yard debris. The transport devices may be attached to powered lawn tools such as riding lawn mowers and utility vehicles. These wheeled transport devices, however, can take up a lot of storage space when not in use. As such, space constraints may prevent users from owning transport devices, forcing owners to carry tools or gardening materials and debris by hand or in small containers suitable for carrying, resulting in more trips and/or physical fatigue.

Examples of collapsible cart are known from the following patent documents: US2720413A, US2008/284119A1, US2012/133112A1.

### BRIEF SUMMARY OF THE INVENTION

Aim of the present invention is to provide a collapsible cart which improves the state of art indicated above. This aim is achieved by the collapsible cart according to one or more of the appended claims. Accordingly, a collapsible cart requiring less storage space than some other wheeled transport devices is disclosed. Aspects of the disclosed technology relate to a wheeled transport device cart configured to releasably couple to a powered lawn tool, such as a riding mower or utility vehicle. The body of the cart is configured to fold or otherwise collapse such that it is substantially flat. The cart can be stored compactly in an upright or substantially vertical position.

The collapsible cart comprises a frame, a tongue assembly, at least one axle, a base, and at least one retaining wall. The tongue assembly is configured to releasably couple the frame to a receiver hitch. The axle is operatively connected to at least one wheel assembly. The axle is also operatively connected and rotatable relative to the frame. The base is operatively connected to the frame, and has at least one retaining wall having a top edge and a bottom edge operatively connected to the base via a rotatable device along the bottom edge. The cart further comprises a discard lock block operatively connected to the base and configured to lock the base to the frame.

In yet another aspect, the rotatable device may have at least about a 270° angle of rotation allowing the retaining walls to be placed in a variety of positions. In one embodiment, the retaining wall may have an erect position with respect to the base thereby forming a load cavity with the base forming a bottom portion of the load cavity and the retaining wall forming a side portion of the load cavity. In yet another embodiment, the retaining wall or walls may have a collapsed position wherein the cart is substantially flat. In yet another aspect, the rotatable device may be a hinge.

In another embodiment, the collapsible cart may further comprises a wheel bracket. The wheel bracket may be a V-shaped structure having a vertex and two distal ends located distally from the vertex. The vertex may be congruent with and rotatable about the axle. The distal ends of the wheel bracket may be securely fastened to the base. The wheel bracket may be configured to rotate the base to an angle ranging from about 0° to about 180° with respect to the frame.

In another embodiment which is not within the scope of claim 1 a collapsible cart with a wheel bracket is disclosed. The collapsible cart may comprise a frame, a tongue assembly, at least one axle, a base and a wheel bracket. The tongue assembly may be configured to releasably couple the frame to a receiver hitch. The axle may be may be operatively connected to at least one wheel assembly. The axle may also be operatively connected and rotatable relative to the frame. The base may be operatively connected to the frame. The wheel bracket may be a V-shaped structure having a vertex and two distal ends located distally from the vertex. The vertex may be congruent with and rotatable about the axle. The distal ends of the wheel bracket may be securely fastened to the base. The wheel bracket may be configured to rotate the base with respect to the frame. In another embodiment, the cart may further comprise a discard lock block operatively connected to the base and configured to lock the base to the frame.

In yet another aspect, the wheel bracket may be configured to rotate the base to an angle of inclination ranging from about 0° to about 180° with respect to the frame. In another aspect, the wheel bracket may rotate the base to an angle of inclination ranging from about 5° to about 50° with respect to the frame.

In yet another aspect, the collapsible cart may further comprise at least one retaining wall having a top edge and a bottom edge, wherein the retaining wall is operatively connected to the base via a rotatable device along the bottom edge. The rotatable device may have an angle of rotation of at least about 270°.

In another embodiment which is not within the scope of claim 1 a collapsible cart with a bracket locking assembly and a tongue assembly is disclosed. The tongue assembly may comprise a proximal end, a distal end, a tongue bracket, a tongue, and a hitch locking mechanism. The proximal end is proximal to the frame and may be configured to couple with the bracket locking mechanism. The distal end may be configured to releasably couple the frame to a receiver hitch. The tongue may be configured to be placed in a stowed position within and/or adjacent to the frame. The receiver hitch may be on a vehicle or powered lawn tool such as a riding lawn mower or utility vehicle.

In another aspect, the proximal end of the tongue assembly may have a hinge that allows the tongue bracket to rotate away from the base towards the bottom of the frame and into a stowed position within and/or adjacent to the frame. In another aspect, the tongue bracket may be configured to telescope to a stowed position within the frame. In yet another aspect, the proximal end of the tongue assembly is configured to releasably couple with the bracket locking mechanism and to be completely removed from the bracket locking mechanism. The tongue bracket may then be inserted in at least one key hole within the frame that is configured to receive and stow the tongue bracket.

In another embodiment the collapsible cart may have at least one retaining wall having a top edge and a bottom edge, wherein the retaining wall is operatively connected to the base via a rotatable device along the bottom edge. The rotatable device may have at least about a 270° angle of rotation. In yet another embodiment, the cart may further comprise a discard lock block operatively connected to the base and configured to lock the base to the frame.

Advantages of the present invention will become more apparent to those skilled in the art from the following description of the embodiments of the invention which have been shown and described by way of illustration. As will be realized, the invention is capable of other and different embodiments, and its details are capable of modification in various respects.

### BRIEF DESCRIPTION OF SEVERAL VIEWS OF THE DRAWINGS

These and other features of the present invention, and their advantages, are illustrated specifically in embodiments of the invention now to be described, by way of example, with reference to the accompanying diagrammatic drawings, in which:
FIG. 1 is a perspective view of an embodiment of a collapsible cart with the retaining walls in an erect position;
FIG. 2 is a perspective view of an embodiment of a collapsible cart with the retaining walls in a discard position;
FIG. 3 is a perspective view of an embodiment of a collapsible cart with the rear wall in a down position;
FIG. 4 is a perspective view of an embodiment of a collapsible cart with the second sidewall in a down position;
FIG. 5 is a perspective view of an embodiment of a collapsible cart with the retaining walls in a collapsed position;
FIG. 6 is a perspective view of an embodiment of a collapsible cart with the retaining walls in a collapsed position and the tongue in a stowed position;
FIG 7. is a perspective view of an embodiment of a collapsible cart in a vertical stowed position.

It should be noted that all the drawings are diagrammatic and not drawn to scale. Relative dimensions and proportions of parts of these figures have been shown exaggerated or reduced in size for the sake of clarity and convenience in the drawings. The same reference numbers are generally used to refer to corresponding or similar features in the different embodiments. Accordingly, the drawing(s) and description are to be regarded as illustrative in nature and not as restrictive.

### DETAILED DESCRIPTION OF THE PREFERRED EMBODIMENT

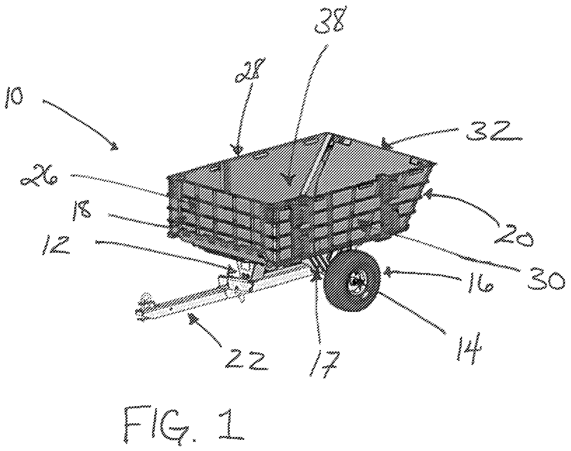

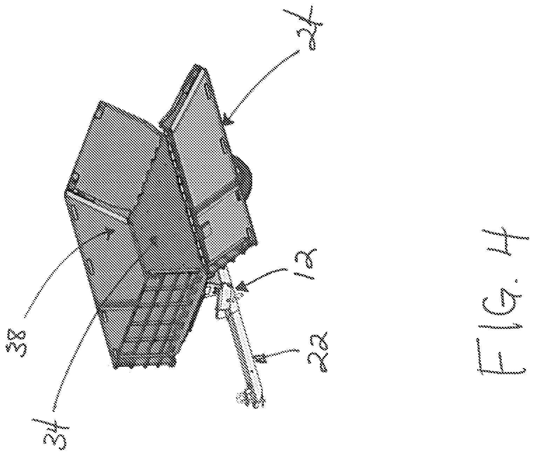

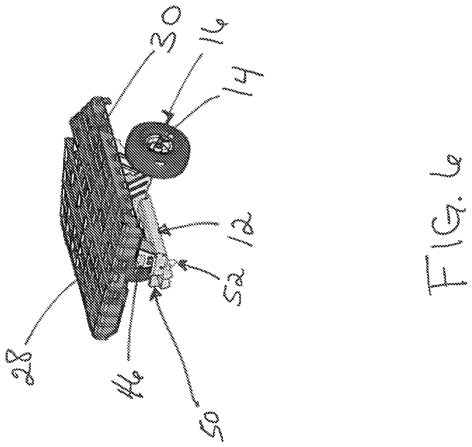

Referring to FIGS. 1-7, various embodiments of a collapsible cart 10 are shown. The collapsible cart is supported on a frame 12 with at least one axle 14 operatively connected to the frame, wherein the axle is rotatable relative to the frame. At least one wheel assembly 16 is operatively connected to each end of the axle. It will be appreciated that the wheel assembly can take on a variety of forms without departing from the scope of the disclosed technology. For example, the wheel assembly can comprise a hub attachable to the axle, a rim, and a tire attached to the rim. The hub, rim and tire may be separate pieces or one or more integral pieces made from the same material. In accordance with one aspect, as shown in FIGS. 1-7, the axle may have at least two wheel assemblies, each attached to one end of the axle. In accordance with another aspect, the collapsible cart may have two axles, located at a front end 18 and at a rear end 20 of the cart respectively.

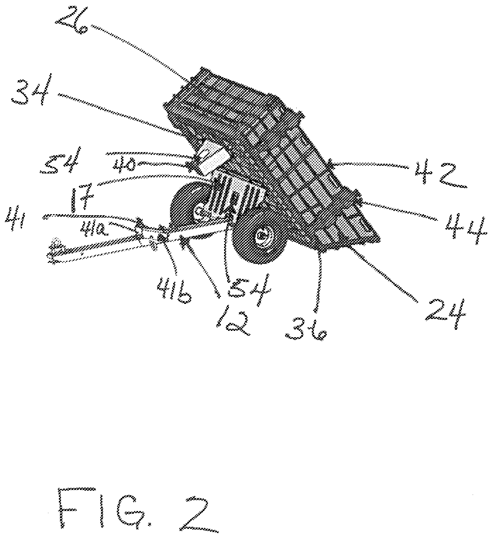

In yet another aspect, one axle 14, is operatively connected to a wheel bracket 17. The wheel bracket 17 may be a v-shaped structure made from two planar structures joined such that they form an acute angle. The vertex of the wheel bracket may be congruent with the wheel axle and rotatable about the wheel axle. As shown in FIG. 2, the ends of the wheel bracket 17 distal to the axle may be securely fastened a load support or base 34. It will be appreciated that other suitable wheel bracket assemblies may be employed without departing from the scope of the disclosed technology.

A tongue assembly 22 may be operatively connected to the frame 12 at the front end 18 of the cart 10. The tongue assembly 22 may be configured to releasably couple with a receiver hitch (not shown) on a powered lawn tool, such as a riding mower or utility vehicle.

The base may have at least one retaining wall 24 operatively connected to the base 34. The retaining wall 24 may have a top edge 42 and a bottom edge 36. In accordance with one aspect of the disclosed technology, at least one retaining wall may have an attachment mechanism 44 for loading one or more gardening tools. In one embodiment, examples of attachment mechanisms include, but are not limited to, hooks, prong hooks, loops, and clips. In one embodiment, the attachment mechanism may be a pair of loops configured to secure the handle of a hand-held gardening device such as a broom, rake, or shovel. In yet other aspects, the base may not have any retaining walls such that the base and frame form a "flat-bed" cart.

The retaining wall 24 may be connected to the base 34 via a rotatable device along the retaining wall's bottom edge 36. The rotatable device may be a hinge. In one embodiment, the rotatable device may have at least about a 180° angle of rotation. In another embodiment, the rotatable device may have at least about a 225° angle of rotation. In yet another embodiment, the rotatable device may have at least about a 270° angle of rotation. Suitable hinges with at least about a 180°, 225° or 270° angle of rotation include, but are not limited to, barrel hinges, flag hinges and piano hinges. One or more portions of the hinge may be integral with the retaining wall and/or the base. In one aspect, one portion of the hinge may be integral with the retaining wall and one portion may be integral with the base, and the pivot rod portion of the hinge is separate from both the retaining wall and base. In another embodiment, the collapsible cart may have at least four retaining walls, a front wall 26, a first sidewall 28, a second sidewall 30, and a rear wall or "tailgate" 32.

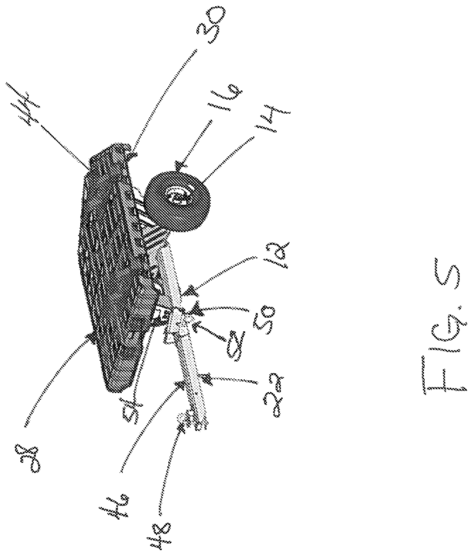

As shown in FIG. 1, the retaining walls may be in an erect or upright position, thereby forming a load cavity 38 to retain the cart's load or contents when the cart is being used or transported. When the retaining walls are in an erect position, one or more of the walls may be secured together with one or more latches. Persons of ordinary skill in the art will recognize that a number of suitable latch mechanisms may be used without departing from the scope of the disclosed technology. As shown in FIG. 1, each sidewall 28 and 30 may have at least two latches located near the top edge 42. The latches located on the sidewalls near the front end 18 may be sliding latches configured to slide into and engage with a receiving mechanizing on the front wall 26. The latches located on the sidewalls near the rear end 20 may be folding latches configured to fold over the tailgate's 32 top edge when the tailgate is in an erect position. When the tailgate 32 is open, the folding latches may be folded against the sidewall. When the cart is empty and not in use, the retaining walls may be in a collapsed position as shown in FIGS. 5-7. When the retaining walls are in a collapsed position, the cart is substantially flat, which allows the cart to be used for a variety of other hauling tasks. In addition, when the retaining walls are in a collapsed position, the cart takes up less storage space. As is described more fully below, the cart can be stored in a substantially horizontal position or in a substantially vertical position.

In accordance with another aspect of the disclosed technology, the cart may have a discard lock block 40 operatively connected to the base 34. The discard lock block 40 is configured to lock or otherwise secure the base 34 and/or load cavity 38 onto the frame 12. When the lock block 40 is released from the frame, the base may be lifted into a discard or unloading position, as shown in FIG. 2. It will be appreciated that the discard lock block can be implemented using a number of suitable devices releasably configured to lock the base 34 to the frame 12 and such that when released, allows the base to be placed into a discard position. In one embodiment, the frame 12 may comprise a lock block release device 41 configured to interact with the discard lock block 40 to lock the base 34 to the frame 12. In accordance with one aspect, the lock block release device may be a device such as a pedal with a releasing end 41a and a locking end 41b. The locking end 41b releasably couples with the discard lock block when in an engaged position to secure the base 34 to the frame 12. When the user desires to move the base to a discard position, the user may step on the releasing end 41a of the lock block release device thereby disengaging the lock block 40 from the frame 12.

When in a discard or unloading position, the base 34 may be moved from a substantially horizontal position that is parallel to the frame, ground or work surface to a discard or unloading position wherein the base is inclined vertically to aid in removal of the load inside the load cavity 38 or on a flat-bed cart. When moving to the unloading position, the wheel bracket 17 and base 34 rotate about the axle 14. In accordance with one aspect, the wheel bracket may be configured to rotate the base to an angle of inclination between about 0° and about 90° with respect to the frame 12. Alternatively, the angle of inclination may range from about 0° to about 50°. In another embodiment, the angle of inclination may be such that the top and bottom edges of the tailgate are on the same horizontal plane. In another embodiment, the angle of inclination may be such that the top edge of the tailgate is lower, or closer to the ground, than the bottom edge. In yet another embodiment, the base may be inclined vertically such that the rear edge of the base 34 is touching or almost touching the ground or work surface. In yet another embodiment, the base may be inclined vertically such that the outer surface of the tailgate 32 is touching or almost touching the ground work surface. The tailgate 32 may be in an erect position or in an open position when the base 34 and/or load cavity 38 are in a discard position.

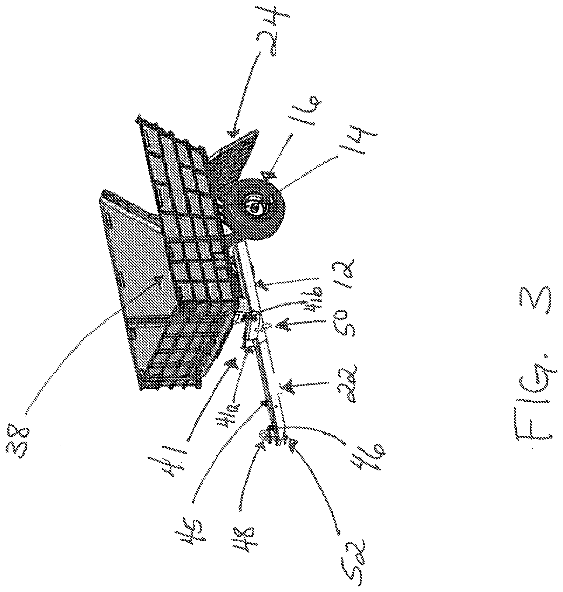

In another embodiment, at least one retaining wall 24 may be rotatable into an open position shown in FIGS. 3-4 for easier loading and unloading of the load cavity load or contents. When in an open position, the retaining wall is rotated substantially outward from the base 34 such that the top edge of the retaining wall is lower, or closer to the ground than the bottom edge.

Turing to FIG. 5, the retaining walls may be rotatable into a collapsed position. When in a collapsed position, the retaining walls are rotated to lay substantially flat on the base 34 and/or another retaining wall.

The tongue assembly 22 may be configured to releasably couple with a receiver hitch (not shown) on a powered lawn tool, such as a riding mower or utility vehicle. The tongue assembly 22 may comprise a tongue bracket 45, a tongue 46 and a hitch locking mechanism 48. The distal end of the tongue 46 may be configured to fit inside a receiver hitch on a powered lawn tool. The distal end of the tongue 46 may also have a hitch locking mechanism 48 to secure the tongue 46 to the receiver hitch. Examples of hitch locking mechanisms include, but are not limited to, locking pins 52, cotter pins, and locking levers. The end of the tongue bracket 45 closest to the frame, may be secured with a bracket locking mechanism 50 attached to the frame 12. Examples of bracket locking mechanisms include, but are not limited to, locking pins 52, cotter pins, and locking levers.

The tongue bracket 45 may be configured such that is can be placed in a stowed position within the frame 12. In accordance with one aspect of the disclosed technology, the end of the tongue bracket 45 closest to the frame may have a hinge that allows the tongue bracket 45 to rotate away from the base towards the bottom of the frame and nestle on or in the bottom of the frame. In accordance with another aspect of the disclosed technology, the tongue bracket 45 may telescope to a stowed position within the frame. In accordance with yet another aspect of the disclosed technology, the tongue bracket 45 is detachable and may be removed from the frame 12 and placed elsewhere within the frame 12 for storage. In this aspect, the frame 12 and/or wheel bracket 17 may have one or more key holes 54 configured to receive the tongue bracket 45.

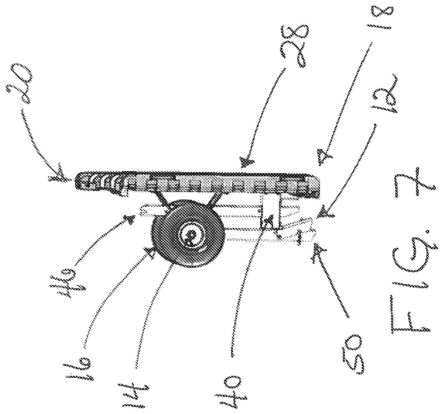

As shown in FIG. 7, the tongue bracket 45 may be removed from the bracket locking mechanism 50 and slid through the key hole(s) 54 and securely stowed within the frame 12 for storage. In accordance with another aspect of the disclosed technology, when the cart is in a collapsed position, the rear end 20 of the cart may be lifted in a vertical direction such that the front end 18 and frame 12 support the collapsed cart in a vertical position thereby reducing the amount of floor space required to store the collapsible cart. It will be appreciated that, in accordance with one exemplary embodiment, this configuration of the cart allows storage in a vertical position can provide up to about a 70% floor space savings compared to leaving the cart in its normal horizontal orientation.

Accordingly, a collapsible cart requiring less storage stage than some other wheeled transport devices is disclosed. In one embodiment, the collapsible cart may comprise a frame, a tongue assembly, at least one axle, a base, and at least one retaining wall. The tongue assembly may be configured to releasably couple the frame to a receiver hitch. The axle may be may be operatively connected to at least one wheel assembly. The axle may also be operatively connected and rotatable relative to the frame. The base may be operatively connected to the frame, and have at least one retaining wall having a top edge and a bottom edge operatively connected to the base via a rotatable device along the bottom edge. In another aspect of the collapsible cart, the cart may further comprise a discard lock block operatively connected to the base and configured to lock the base to the frame.

In yet another aspect, the rotatable device may have at least about a 270° angle of rotation allowing the retaining walls to be placed in a variety of positions. In one embodiment, the retaining wall may have an erect position with respect to the base thereby forming a load cavity with the base forming a bottom portion of the load cavity and the retaining wall forming a side portion of the load cavity. In yet another embodiment, the retaining wall or walls may have a collapsed position wherein the cart is substantially flat. In yet another aspect, the rotatable device may be a hinge.

In another embodiment, the collapsible cart may further comprises a wheel bracket. The wheel bracket may be a V-shaped structure having a vertex and two distal ends located distally from the vertex. The vertex may be congruent with and rotatable about the axle. The distal ends of the wheel bracket may be securely fastened to the base. The wheel bracket may be configured to rotate the base to an angle ranging from about 0° to about 180° with respect to the frame.

In another embodiment a collapsible cart with a wheel bracket is disclosed. The collapsible cart may comprise a frame, a tongue assembly, at least one axle, a base and a wheel bracket. The tongue assembly may be configured to releasably couple the frame to a receiver hitch. The axle may be may be operatively connected to at least one wheel assembly. The axle may also be operatively connected and rotatable relative to the frame. The base may be operatively connected to the frame. The wheel bracket may be a V-shaped structure having a vertex and two distal ends located distally from the vertex. The vertex may be congruent with and rotatable about the axle. The distal ends of the wheel bracket may be securely fastened to the base. The wheel bracket may be configured to rotate the base with respect to the frame. In another embodiment, the cart may further comprise a discard lock block operatively connected to the base and configured to lock the base to the frame.

In yet another aspect, the wheel bracket may be configured to rotate the base to an angle of inclination ranging from about 0° to about 90° with respect to the frame. In another aspect, the wheel bracket may rotate the base to an angle of inclination ranging from about 0° to about 50° with respect to the frame.

In yet another aspect, the collapsible cart may further comprise at least one retaining wall having a top edge and a bottom edge, wherein the retaining wall is operatively connected to the base via a rotatable device along the bottom edge. The rotatable device may have an angle of rotation of at least about 270°.

In another embodiment a collapsible cart with a bracket locking assembly and a tongue assembly is disclosed. The tongue assembly may comprise a proximal end, a distal end, a tongue bracket, a tongue, and a hitch locking mechanism. The proximal end is proximal to the frame and may be configured to couple with the bracket locking mechanism. The distal end may be configured to releasably couple the frame to a receiver hitch. The tongue may be configured to be placed in a stowed position within and/or adjacent to the frame. The receiver hitch may be on a vehicle or powered lawn tool such as a riding lawn mower or utility vehicle.

In another aspect, the proximal end of the tongue assembly may have a hinge that allows the tongue bracket to rotate away from the base towards the bottom of the frame and into a stowed position within and/or adjacent to the frame. In another aspect, the tongue bracket may be configured to telescope to a stowed position within the frame. In yet another aspect, the proximal end of the tongue assembly is configured to releasably couple with the bracket locking mechanism and to be completely removed from the bracket locking mechanism. The tongue bracket may then be inserted in at least one key hole within the frame that is configured to receive and stow the tongue bracket.

In another embodiment the collapsible cart may have at least one retaining wall having a top edge and a bottom edge, wherein the retaining wall is operatively connected to the base via a rotatable device along the bottom edge. The rotatable device may have at least about a 270° angle of rotation. In yet another embodiment, the cart may further comprise a discard lock block operatively connected to the base and configured to lock the base to the frame.

In another embodiment, the wheels of the cart are connected to a flip-up axle to change the vertical height of the cart relative to the ground. The cart includes a dual attachment structure to facilitate attaching the cart to the riding mower or utility vehicle at different heights.

While preferred embodiments of the present invention have been described, it should be understood that the present invention is not so limited and modifications may be made without departing from the present invention. The scope of the present invention is defined by the appended claims.

## Claims

1. A collapsible cart (10) comprising:
a frame (12) ;
a tongue assembly (22) configured to releasably couple said frame (12) to an associated receiver hitch;
at least one axle (14) operatively connected to said frame (12) and to at least one wheel assembly (16), wherein said at least one axle (14) is rotatable relative to said frame (12);
a base (34) operatively connected to said frame (12); and
at least one retaining wall (24) having a top edge and a bottom edge (36), wherein said retaining wall (24) is operatively connected to said base (34) via a rotatable device along said bottom edge (36),
**characterized in that** the collapsible cart (10) comprises a discard lock block (40) operatively connected to said base (34) to allow discard of the base (34) and configured to lock said base (34) to said frame (12),
wherein said rotatable device provides an angle of rotation for the at least one retaining wall (24) of at least about 225°, .

2. The collapsible cart (10) of claim 1, comprising a plurality of retaining walls (24), wherein when the plurality of retaining walls (24) are in an upright position, the plurality of retaining walls (24) forms a load cavity (38) with the base (34) forming a bottom portion of the load cavity (38) and said plurality of retaining walls (24) forming a side portion of said load cavity (38).

3. The collapsible cart (10) of claim 2, wherein said plurality of retaining walls (24) have a collapsed position wherein the plurality of retaining walls (24) are oriented to be substantially parallel to the base (34), whereby the cart (10) is substantially flat.

4. The collapsible cart (10) of claim 2 or claim 3, wherein the frame (12) and a front portion of the cart (10) cooperate to support the cart (10) in a substantially vertical position for storage when the plurality of retaining walls (24) are oriented to be substantially parallel to the base (34).

5. The collapsible cart (10) of any of the previous claims, wherein said rotatable device is a hinge.

6. The collapsible cart (10) of any of the previous claims, further comprising a wheel bracket (17), wherein:
said wheel bracket (17) is a V-shaped structure having a vertex and two distal ends located distally from said vertex;
wherein said vertex is congruent with said axle (14) and rotatable about said axle (14) and wherein said distal ends are securely fastened to said base (34);
and wherein said wheel bracket (17) is configured to rotate said base (34) to an angle of inclination ranging from about 0° to about 90° with respect to said frame (12).

7. The collapsible cart (10) of any of the previous claims, wherein the discard lock block (40) is releasable from the frame (12), to allow the base to be lifted into a discard or unloading position.

8. The collapsible cart (10) of any of the previous claims, wherein the frame (12) includes a lock block release device (41), configured to interact with the discard lock block (40) to lock the base (34) to the frame (12).

9. The collapsible cart (10) of claim 8, wherein the lock block release device (41) includes a pedal with a releasing end (41a) and a locking end (41b), wherein the locking end (41b) releasably couples with the discard lock block (40) when in an engaged position to secure the base (34) to the frame (12).

10. The collapsible cart (10) of claim 9, wherein the releasing end (41a) of the lock block release device (41) is movable upon stepping by the user thereon, to disengage the lock block (40) from the frame (12).

## Patentansprüche

1. Zusammenklappbarer Wagen (10), umfassend:
einen Rahmen (12);
eine Zungenanordnung (22), die so konfiguriert ist, dass sie den Rahmen (12) lösbar mit einer zugehörigen Empfangsadapter koppelt;
mindestens eine Achse (14), die betriebswirksam mit dem Rahmen (12) und mit mindestens einer Radanordnung (16) verbunden ist, wobei die mindestens eine Achse (14) relativ zu dem Rahmen (12) drehbar ist;
eine Basis (34), die betriebswirksam mit dem Rahmen (12) verbunden ist; und
mindestens eine Rückhaltewand (24) aufweisend eine Oberkante und eine Unterkante (36), wobei die Rückhaltewand (24) mit der Basis (34) über eine drehbare Vorrichtung entlang der Unterkante (36) betriebswirksam verbunden ist,
**dadurch gekennzeichnet, dass** der zusammenklappbare Wagen (10) einen Abwurfsperrblock (40) umfasst, der betriebswirksam mit der Basis (34) verbunden ist, um ein Abwerfen der Basis (34) zu ermöglichen, und konfiguriert ist, um die Basis (34) an dem Rahmen (12) festzuspannen,
wobei die drehbare Vorrichtung einen Drehwinkel für die mindestens eine Rückhaltewand (24) von mindestens etwa 225° bereitstellt.

2. Zusammenklappbarer Wagen (10) nach Anspruch 1, umfassend eine Vielzahl an Rückhaltewänden (24), wobei die Vielzahl an Rückhaltewänden (24), wenn sich die Vielzahl an Rückhaltewänden (24) in einer aufrechten Position befinden, einen Ladehohlraum (38) bildet, wobei die Basis (34) einen Bodenabschnitt des Ladehohlraums (38) bildet und die Vielzahl an Rückhaltewänden (24) einen Seitenabschnitt des Ladehohlraums (38) bildet.

3. Zusammenklappbarer Wagen (10) nach Anspruch 2, wobei die Vielzahl an Rückhaltewänden (24) eine zusammengeklappte Position aufweisen, wobei die Vielzahl an Rückhaltewänden (24) so ausgerichtet sind, dass sie im Wesentlichen parallel zu der Basis (34) sind, wodurch der Wagen (10) im Wesentlichen flach ist.

4. Zusammenklappbarer Wagen (10) nach Anspruch 2 oder Anspruch 3, wobei der Rahmen (12) und ein vorderer Abschnitt des Wagens (10) zusammenwirken, um den Wagen (10) in einer im Wesentlichen vertikalen Position zur Lagerung zu stützen, wenn die Vielzahl an Rückhaltewänden (24) so ausgerichtet sind, dass sie im Wesentlichen parallel zur Basis (34) sind.

5. Zusammenklappbarer Wagen (10) nach einem der vorhergehenden Ansprüche, wobei die drehbare Vorrichtung ein Scharnier ist.

6. Zusammenklappbarer Wagen (10) nach einem der vorhergehenden Ansprüche, ferner umfassend eine Radhalterung (17), wobei:
die Radhalterung (17) eine V-förmige Struktur mit einem Scheitelpunkt und zwei distalen Enden ist, die distal von dem Scheitelpunkt angeordnet sind;
wobei der Scheitelpunkt mit der Achse (14) deckungsgleich und um die Achse (14) drehbar ist und wobei die distalen Enden fest an der Basis (34) befestigt sind;
und wobei die Radhalterung (17) so konfiguriert ist, dass sie die Basis (34) in einem Neigungswinkel im Bereich von etwa 0° bis etwa 90° in Bezug auf den Rahmen (12) dreht.

7. Zusammenklappbarer Wagen (10) nach einem der vorhergehenden Ansprüche, wobei der Abwurfsperrblock (40) von dem Rahmen (12) lösbar ist, um zu ermöglichen, dass die Basis in eine Abwurf- oder Entladeposition gehoben wird.

8. Zusammenklappbarer Wagen (10) nach einem der vorhergehenden Ansprüche, wobei der Rahmen (12) eine Sperrblockentriegelungsvorrichtung (41) einschließt, die so konfiguriert ist, dass sie mit dem Abwurfsperrblock (40) zusammenwirkt, um die Basis (34) an dem Rahmen (12) festzuspannen.

9. Zusammenklappbarer Wagen (10) nach Anspruch 8, wobei die Sperrblockentriegelungsvorrichtung (41) ein Pedal mit einem Entriegelungsende (41a) und einem Verriegelungsende (41b) einschließt, wobei das Verriegelungsende (41b) lösbar mit dem Abwurfsperrblock (40) gekoppelt ist, wenn er sich in einer Eingriffsposition befindet, um die Basis (34) an dem Rahmen (12) zu fixieren.

10. Zusammenklappbarer Wagen (10) nach Anspruch 9, wobei das Entriegelungsende (41a) der Sperrblockentriegelungsvorrichtung (41) beim Treten des Benutzers darauf bewegbar ist, damit der Sperrblock (40) vom Rahmen (12) abgekoppelt wird.

## Revendications

1. Chariot pliant (10), comprenant :
un châssis (12) ;
un assemblage de languettes (22) configuré pour coupler de façon amovible ledit châssis (12) à un attelage de remorque ;
au moins un axe (14) fonctionnellement relié au dit châssis (12) et à au moins un assemblage de roue (16), dans lequel ledit au moins un axe (14) est pivotant par rapport au dit châssis (12) ;
une base (34) fonctionnellement reliée au dit châssis (12) ; et
au moins une cloison de retenue (24) comportant un bord supérieur et un bord inférieur (36), dans lequel ladite cloison de retenue (24) est fonctionnellement reliée à ladite base (34) via un dispositif rotatif le long dudit bord inférieur (36),
**caractérisé en ce que** le chariot pliant (10) comprend un bloc de verrouillage d'écartement (40) fonctionnellement relié à ladite base (34) pour permettre l'écartement de la base (34) et configuré pour verrouiller ladite base (34) au dit châssis (12),
dans lequel ledit dispositif rotatif fournit un angle de rotation pour l'au moins une cloison de retenue (24) d'au moins 225° environ.

2. Chariot pliant (10) selon la revendication 1, comprenant une pluralité de cloisons de retenue (24), dans lequel lorsque la pluralité de cloisons de retenue (24) se trouvent dans une position verticale, la pluralité de cloisons de retenue (24) forme une cavité de chargement (38) avec la base (34) formant une partie de fond de la cavité de chargement (38) et ladite pluralité de cloisons de retenue (24) formant une partie latérale de ladite cavité de chargement (38).

3. Chariot pliant (10) selon la revendication 2, dans lequel ladite pluralité de cloisons de retenue (24) ont une position pliée dans laquelle la pluralité de cloisons de retenue (24) sont orientées pour être substantiellement parallèles à la base (34), par laquelle le chariot (10) est substantiellement plat.

4. Chariot pliant (10) selon la revendication 2 ou la revendication 3, dans lequel le châssis (12) et une partie antérieure du chariot (10) coopèrent pour supporter le chariot (10) dans une position substantiellement verticale pour le stockage lorsque la pluralité de cloisons de retenue (24) sont orientées pour être substantiellement parallèles à la base (34).

5. Chariot pliant (10) selon l'une quelconque des revendications précédentes, dans lequel ledit dispositif pivotant est une charnière.

6. Chariot pliant (10) selon l'une quelconque des revendications précédentes, comprenant de plus un support de roue (17), dans lequel :
ledit support de roue (17) a une structure en « V » comportant un sommet et deux extrémités distales situées de façon distale à partir dudit sommet ;
dans lequel ledit sommet est congruent au dit axe (14) et peut pivoter autour dudit axe (14) et dans lequel lesdites extrémités distales sont fixées fermement à ladite base (34) ;
et dans lequel ledit support de roue (17) est configuré pour faire tourner ladite base (34) selon un angle d'inclinaison compris entre environ 0° et environ 90° par rapport au dit châssis (12).

7. Chariot pliant (10) selon l'une quelconque des revendications précédentes, dans lequel le bloc de verrouillage d'écartement (40) est séparable du châssis (12) pour permettre à la base d'être soulevée dans une position d'écartement ou de déchargement.

8. Chariot pliant (10) selon l'une quelconque des revendications précédentes, dans lequel le châssis (12) inclut un dispositif de libération du bloc de verrouillage (41), configuré pour interagir avec le bloc de verrouillage d'écartement (40) pour verrouiller la base (34) au châssis (12).

9. Chariot pliant (10) selon la revendication 8, dans lequel le dispositif de libération du bloc de verrouillage (41) inclut une pédale dotée d'une extrémité de libération (41a) et d'une extrémité de verrouillage (41b), dans lequel l'extrémité de verrouillage (41b) s'accouple de façon amovible au bloc de verrouillage d'écartement (40) lorsqu'elle se trouve dans une position engagée pour fixer la base (34) au châssis (12).

10. Chariot pliant (10) selon la revendication 9, dans lequel l'extrémité de libération (41a) du dispositif de libération du bloc de verrouillage (41) est mobile lorsque l'utilisateur marche dessus, pour désengager le bloc de verrouillage (40) du châssis (12).
